# EUROPÄISCHE PATENTSCHRIFT

(11) **EP 0 539 745 B1**
(45) Veröffentlichungstag und Bekanntmachung des Hinweises auf die Patenterteilung: **19.04.1995**
(21) Anmeldenummer: 92116703.7
(22) Anmeldetag: 30.09.1992
(51) Int. Cl.: A01B 73/06, A01D 63/04

(54) **Mähdrescher mit Halmteiler**
Combine harvester with divider
Moisonneuse-batteuse avec diviseur

(30) Priorität: 31.10.1991 DE 4135884
(43) Veröffentlichungstag der Anmeldung: 05.05.1993
(73) Patentinhaber: CLAAS Kommanditgesellschaft auf Aktien, 33428 Harsewinkel (DE)
(72) Erfinder: Ostrup, Heinrich, W-4834 Harsewinkel (DE)
(74) Vertreter: Hanewinkel, Lorenz, Dipl.-Phys.

(56) Entgegenhaltungen:
- DE-A- 1 926 441
- DE-A- 2 058 255
- DE-A- 2 454 479

## Beschreibung

Die Erfindung bezieht sich auf einen selbstfahrenden Mähdrescher mit einem an der Vorderseite des Mähdrescher-Fahrgestelles querliegend angeordnetem Mähwerk und zwei seitlichen, dem Mähwerk vorgelagerten, jeweils aus einem Hauptteiler, einem Innenabweiser und einem Außenabweiser gebildeten Halmteiler, welche aus ihrer in Fahrtrichtung zeigenden, vom Mähwerk nach vorn abstehenden Arbeitsstellung um je ein Gelenk vor das Mähwerk in die Transport- und Ruhestellung einschwenkbar sind.

Aus der DE-OS 20 58 255 sind solche Mähdrescher mit um je ein Gelenk einschwenkbaren Halmteilern bekannt, bei denen die Halmteiler Außenabweiser aufweisen, welche jedoch äußerst kurz ausgeführt sind und somit beim Einschwenken vor das Mähwerk gelangen. Diese Verschwenkung der Halmteiler mit Außenabweiser ist jedoch bei äußerst langen Außenabweisern nicht einsetzbar, da diese dann sehr weit seitlich nach außen vorstehen würden.

Einschwenkbare Halmteiler sind auch aus der DE-OS 24 54 479 bekannt geworden, wobei dabei die Halmteiler keinen nach außen hinausragenden Außenabweiser aufweisen.

Aufgabe der Erfindung ist es, die mit einem Außenabweiser ausgestatteten Halmteiler an einem Mähdrescher in ihrer Ausführung und Schwenkung dahingehend zu verbessern, daß der Außenabweiser, insbesondere bei langer Ausführung, äußerst kompakt und kaum nach außen vorstehend an das Mähwerk in die Transportstellung verbringbar ist.

Diese Aufgabe wird erfindungsgemäß durch die kennzeichnenden Merkmale des Patentanspruches 1 gelöst, wobei die sich daran anschließenden Unteransprüche noch förderliche und vorteilhafte Gestaltungsmerkmale zur Weiterbildung der Aufgabenlösung enthalten.

Die Halmteiler gemäß der Erfindung sind in ihrer Ausführung und Schwenkung derart gestaltet worden, daß sie um das Gelenk äußerst flach liegend gegen die Frontseite des Mähwerkes einschwenkbar sind und dabei, auch bei äußerst langer Ausführung des Außenabweisers, nicht wesentlich nach außen seitlich vorstehen.

Diese Verschwenkung wird durch eine Zwangsführung in Form eines Steuerhebels erreicht, der am Außenabweiser und an der Mähwerkseite gelenkig angreift und bei der verschwenkung des Halmteilers dessen Außenabweiser durch die gelenkige Lagerung des Außenabweisers im Frontbereich des Halmteilers flach an den Hauptteiler heranzieht und gleichzeitig das hintere, gelenkig mit dem vorderen Abweiserteil verbundene Abweiserteil ebenfalls flach an den Außenabweiser bzw. die Mähwerkseite heranbringt.

Da der Außenabweiser aufgrund seiner großen Länge in zwei Teile aufgeteilt ist und diese beiden Teile miteinander gelenkig verbunden sind, kann einerseits das hintere Außenabweiserteil um die Gelenkachse flachliegend an das vordere Außenabweiserteil herangeschwenkt und dann mit dem vorderen Abweiserteil beim Einschwenken des Halmteilers flachliegend gegen den Hauptteiler herangeschwenkt werden, oder aber das hintere Außenabweiserteil wird durch den Steuerhebel um die Gelenkachse gegenüber dem vorderen Außenabweiserteil in Richtung Seitenwand des Mähwerkes verschwenkt und liegt dann mit geringem Abstand parallel zur Mähwerkseite, so daß dieser Außenabweiser dann einen etwa rechten Winkel in der eingeschwenkten Stellung des Halmteilers einnimmt.

Die Gelenkausführung des Außenabweisers und die Zwangsführung durch den Steuerhebel ist einfach und kostengünstig aufgebaut und zeigt bei dauerhaft haltbarer Ausführung eine sichere Schwenk- und Zwangsführungsfunktion.

In der gestreckten Arbeitsstellung der beiden Außenabweiserteile werden diese durch einen einfachen Feststeller gegeneinander arretiert.

Durch diese Ausführung des Halmteilers kann er aufgrund der gelenkigen Ausbildung des Außenabweisers und der schwenkbaren Zwangsführung mit einem äußerst langen Außenabweiser ausgerüstet werden, der dann für die Transportstellung trotzdem eine kompakte und wenig Platz beanspruchende Lage einnimmt.

Anhand der Zeichnungen wird nachfolgend ein Ausführungsbeispiel in Variation näher erläutert. Es zeigt:
- Fig. 1: eine Seitenansicht des Frontbereiches eines Mähdreschers mit dem Mähwerk zugeordnetem Halmteiler in der Arbeitsstellung des Halmteilers,
- Fig. 2: eine Draufsicht auf einen in die Transportstellung eingeschwenkten Halmteiler und an denselben mit einem Vorderteil angelegten und mit dem Hinterteil an die Mähwerkseite angeschwenkten Außenabweiser und in strichpunktierten Linien in die Arbeitsstellung ausgeschwenktem Halmteiler,
- Fig. 3: eine Draufsicht auf einen in die Arbeitsstellung ausgeschwenkten Halmteiler in abgeänderter Ausführung,
- Fig. 4: eine Draufsicht auf den Halmteiler nach Fig. 3 in der eingeschwenkten Transportstellung mit an den Hauptteiler angelegtem Vorderteil und an dieses Vorderteil angeschwenktem Hinterteil des Außenabweisers und in strichpunktierter Stellung in Arbeitsstellung des Halmteilers.

Der selbstfahrende Mähdrescher weist in seinem Fahrgestell (1) bzw. seinem Maschinengehäuse die für die Erntegutbehandlung erforderlichen Vorrichtungen auf und hat in bekannter Weise im Frontbereich ein querliegendes, aus einem Mähtisch und einem Mähbalken gebildetes Mähwerk (2) - Schneidwerk -, dem ein Einzugsförderer (3), vorzugsweise eine Schnecke, zugeordnet und eine Haspel (4) mit Zinken vorgelagert ist.

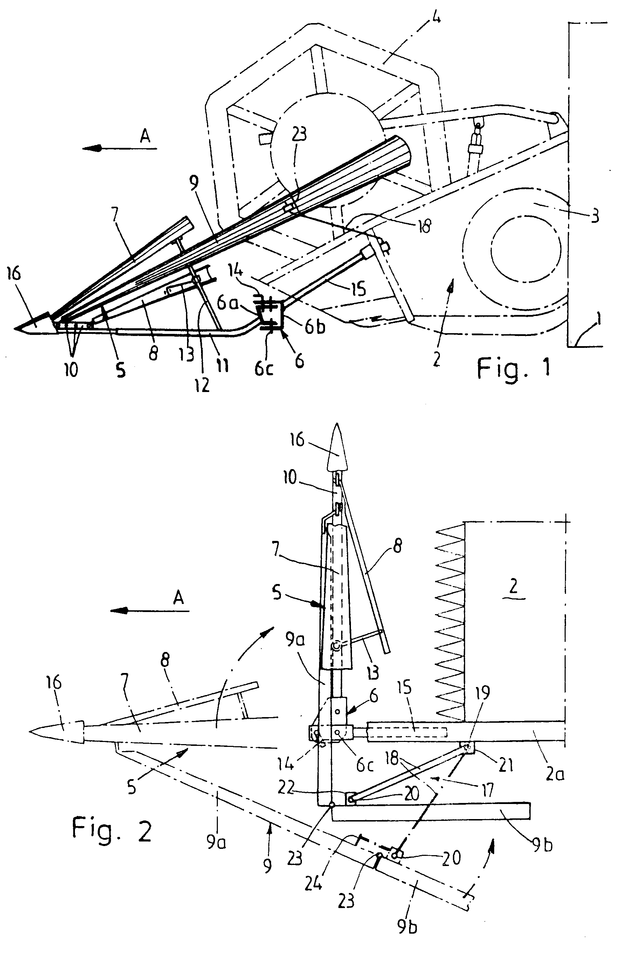

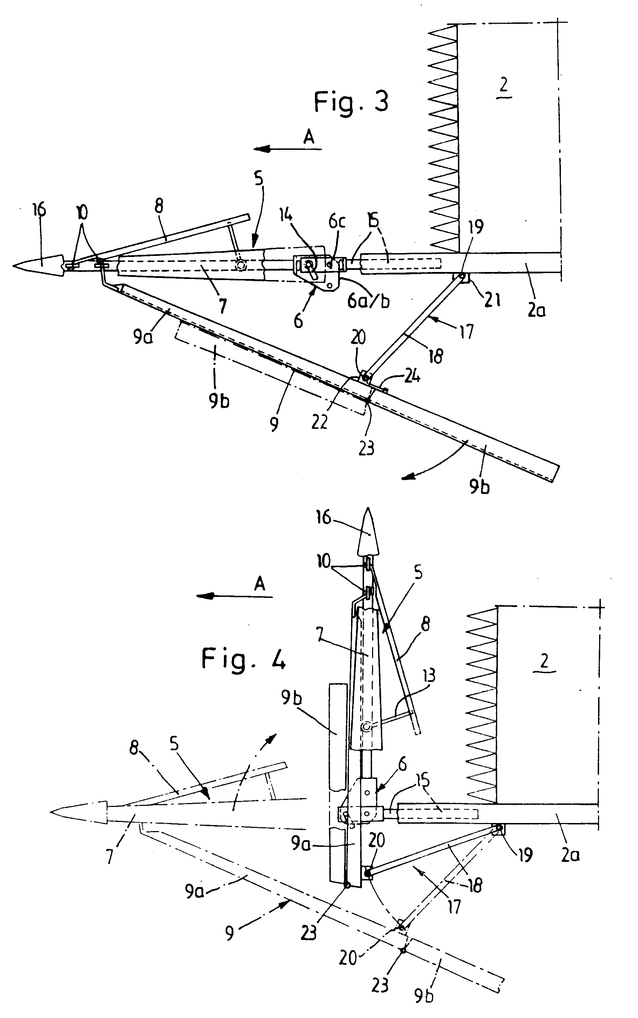

Weiterhin sind dem Mähwerk (2) zwei seitliche Halmteiler (5) vorgelagert, die in ihrer Arbeitsstellung in Fahrtrichtung (A) zeigen und nach vorn vom Mähwerk (2) abstehen - vgl. volle Linien in Fig. 1, 3 und strichpunktierte Linien in Fig. 2 und 4 - und für die Transport- und Ruhestellung um je ein Gelenk (6) vor das Mähwerk (2) einschwenkbar sind - vgl. volle Linien in Fig. 2 und 4 - .

Jeder der beiden Halmteiler (5) setzt sich aus einem Hauptteiler (7), einem Innenabweiser (8) und einem Außenabweiser (9) zusammen, wobei der Innen- und Außenabweiser (8, 9) mit seinem vorderen Ende in einer Lagerstelle (10) eines Rohres (11) hakenartig eingehängt und somit beweglich gegenüber der Halterung (10) in Seiten- und Höhenrichtung gehalten sind.

Der Hauptteiler (7) wird durch eine Stütze (12) in seiner schräg nach oben und entgegen der Fahrtrichtung (A) zeigenden Stellung gegenüber dem Rohr (11) fixiert und der Innenabweiser (8) ist durch eine weitere Stütze (13), die sich an der Stütze (12) abstützt, in seiner schräg nach innen und oben und entgegen der Fahrtrichtung (A) angestellten Schräglage gehalten.

Das Gelenk (6) jedes Halmteilers (5) ist beispielsweise von zwei ineinandergreifenden U-Profilen (6a, 6b) und einer diese beiden Profile (6a, 6b) gegeneinander verschwenkbaren, vertikalen Achse (6c) sowie einem die Profile (6a, 6b) in beiden verschwenkten Stellungen gegeneinander arretierenden Steckbolzen (14) gebildet. Ein Gelenkprofil (6a) ist am Rohr (11) befestigt und das andere Gelenkprofil (6b) an einer Führungsstrebe (15) angebracht, welche in der Seitenwand (2a) des Mähwerkes (2) festgelegt ist.

Die frontseitige bewegliche Lagerung (10) jedes Halmteilers (5) für seine drei Halmteiler-Teile (7, 8, 9) wird von einem Schuh (16) überfaßt.

Der Außenabweiser (9) jedes Halmteilers (5) wird beim Einschwenken der Halmteiler (5) auf das Mähwerk (2) zu über eine Zwangsführung (17) an den Hauptteiler (7) angelegt, so daß der Außenabweiser (9) flach am Hauptteiler (7) anliegt.

Die Zwangsführung (17) ist von einem zwischen der Mähwerkseite (Seitenwand (2a)) und dem Außenabweiser (9) gelenkig gelagerten Steuerhebel (18) gebildet, der als in sich starrer Hebel ausgeführt ist und mit seinen beiden Längenenden um je eine vertikale Schwenkachse (19, 20) in einem an der Seitenwand (2a) des Mähwerkes (2) und am Außenabweiser (9) befestigten Lagerbock (21, 22) gelenkig lagert.

Der Außenabweiser (9) ist in bevorzugter Weise in Längsrichtung in ein Vorder- und ein Hinterteil (9a, 9b) geteilt und seine beiden Abweiserteile (9a, 9b) sind durch ein Gelenk (Schwenkachse) (23) gegeneinander verschwenkbar miteinander verbunden; das freiendseitige hintere Abweiserteil (9b) läßt sich dabei entweder an das am Hauptteiler (7) anschwenkbare vordere Abweiserteil (9a) anlegen oder auf die Seitenwand (2a) des Mähwerkes (2) zu verschwenken (Fig. 2).

Der Steuerhebel (18) ist gemäß Ausführung nach Fig. 2 mit seinem einen Längenende im Abstand zur Abweiserteil-Gelenkachse (23) am hinteren Abweiserteil (9b) des Außenabweisers (9) angelenkt; in Abhängigkeit von der Halmteilerverschwenkung um das Gelenk (6), d.h. der Verschwenkung von Hauptteiler (7) mit Innenabweiser (8) und vorderem Abweiserteil (9a) des Außenabweisers (9) vor das Mähwerk (2) wird das hintere Abweiserteil (9b) in Richtung Mähwerk-Seitenwand (2a) um die Achse (23) durch den Steuerhebel (18) zwangsgeführt verschwenkt und liegt dann mit einem geringen Abstand parallel zu dieser Seitenwand (2a), wie in Fig. 2 in vollen Linien gezeigt.

Der Steuerhebel (18) gemäß der Ausführung nach Fig.. 3 und 4 ist mit seinem einen Längenende im Abstand zur Abweiserteil-Schwenkachse (23) am mit dem Hauptteiler (7) verbundenen vorderen Abweiserteil (9a) des Außenabweisers (9) angelenkt; zum Einschwenken des Halmteilers (5) wird dann zuerst das hintere Abweiserteil (9b) des Außenabweisers (9) um die Schwenkachse (23) an das vordere Abweiserteil (9a) herangeschwenkt - Fig. 3 strich-punktierte Darstellung des Abweiserteiles (9b) - und dann der gesamte Halmteiler (5) um sein Gelenk (6) vor das Mähwerk (2) eingeschwenkt, so daß der Außenabweiser (9) mit seinen beiden Teilen (9a, 9b) flach aneinander und auch am Hauptteiler (7) anliegt (Fig. 4).

Die beiden gelenkig miteinander verbundenen Teile (9a, 9b) des Außenabweisers (9) werden im Gelenkbereich durch einen Feststeller (24) in Form eines Riegels, eines Rastbolzens, eines Spannhebels, od. dgl., in der in eine gemeinsame Längsrichtung in die Arbeitsstellung ausgeschwenkten Lage arretiert (Fig. 2 und 3).

Die gelenkige Teilung des Außenabweisers (9) ermöglicht eine lange Ausführung desselben und trotzdem platzmäßig günstige Einschwenkung in die Transportstellung.

Es besteht jedoch auch die Möglichkeit, den Außenabweiser (9) bei kürzerer Ausführung in sich starr (ungeteilt) auszubilden, wobei er dann ebenfalls über die Zwangsführung (17) beim Einschwenken flach an den Hauptteiler (7) angelegt wird.

In beiden Ausführungsformen des Außenabweisers (9) wird diese flache Anlegung an den Hauptteiler (7) durch die frontseitige bewegliche und gelenkige Halterung (10) am Hauptteiler (7) ermöglicht.

## Patentansprüche

1. Mähdrescher mit einem an der Vorderseite des Mähdrescher-Fahrgestelles querliegend angeordnetem Mähwerk (2) und zwei seitlichen, dem Mähwerk (2) vorgelagerten, jeweils aus einem Hauptteiler (7), einem Innenabweiser (8) und einem Außenabweiser (9) gebildeten Halmteilern (5), welche aus ihrer in Fahrtrichtung zeigenden, vom Mähwerk (2) nach vorn abstehenden Arbeitsstellung um je ein Gelenk (6) vor das Mähwerk (2) in die Transport- und Ruhestellung einschwenkbar sind, dadurch gekennzeichnet, daß der Außenabweiser (9) jedes Halmteilers (5) beim Einschwenken der Halmteiler (5) auf das Mähwerk (2) zu über eine Zwangsführung (17) an den Hauptteiler (7) angelegt wird.

2. Mähdrescher nach Anspruch 1, dadurch gekennzeichnet, daß die Zwangsführung (17) von einem zwischen der Mähwerkseite und dem Außenabweiser (9) gelenkig gelagerten Steuerhebel (18) gebildet ist.

3. Mähdrescher nach Anspruch 1 und 2, dadurch gekennzeichnet, daß der Steuerhebel (18) von einem in sich starren Hebel gebildet und mit seinen beiden Längenenden um je eine vertikale Schwenkachse (19, 20) in einem an der Seitenwand (2a) des Mähwerkes (2) und am Außenabweiser (9) befestigten Lagerbock (21, 22) gelenkig gelagert ist.

4. Mähdrescher nach einem der Ansprüche 1 bis 3, dadurch gekennzeichnet, daß der Außenabweiser (9) in Längsrichtung in ein vorderes und ein hinteres Abweiserteil (9a, 9b) aufgeteilt ist, seine beiden Abweiserteile (9a, 9b) durch ein Gelenk (23) gegeneinander verschwenkbar miteinander verbunden sind und das hintere Abweiserteil (9b) an das am Hauptteiler (7) anschwenkbare vordere Abweiserteil (9a) anlegbar oder auf die Seitenwand (2a) des Mähwerkes (2) zu verschwenkbar ist.

5. Mähdrescher nach einem der Ansprüche 1 bis 4, dadurch gekennzeichnet, daß der Steuerhebel (18) mit seinem einen Längenende im Abstand zur Abweiserteil-Schwenkachse (23) am hinteren Abweiserteil (9b) angelenkt ist und in Abhängigkeit von der Halmteilerverschwenkung über den Steuerhebel (18) das vordere Abweiserteil (9a) an den Hauptteiler (7) angeschwenkt und das hintere Abweiserteil (9b) zwangsgeführt verschwenkt und im parallelen Abstand zur Seitenwand (2a) gehalten wird (Fig. 2).

6. Mähdrescher nach einem der Ansprüche 1 bis 4, dadurch gekennzeichnet, daß der Steuerhebel (18) mit seinem einen Längenende im Abstand zur Abweiserteil-Schwenkachse (23) am vorderen Abweiserteil (9a) angelenkt ist und das hintere Abweiserteil (9b) um die Schwenkachse (23) an das vordere Abweiserteil (9a) anschwenkbar ist und beide aneinanderliegenden Abweiserteile (9a, 9b) bei der Verschwenkung des Halmteilers (5) um sein Gelenk (6) gemeinsam durch den Steuerhebel (18) an den Hauptteiler (7) herangeschwenkt werden (Fig. 3 und 4).

7. Mähdrescher nach einem der Ansprüche 1 bis 6, dadurch gekennzeichnet, daß das Schwenkgelenk (6) zwischen Halmteiler (5) und Mähwerk-Seitenwand (2a) in ein in einer Halterung (10) die Abweiser (7, 8, 9) am frontseitigen Ende gelenkig aufnehmenden Rohr (11) und eine an der Mähwerk-Seitenwand (2a) festgelegte Führungsstrebe (17) eingesetzt ist und von zwei ineinandergreifenden, um eine gemeinsame vertikale Schwenkachse (6c) verschwenkbaren und in beiden um etwa 90 Grad gegeneinander verschwenkbaren Stellungen durch einen Steckbolzen (14) arretierbaren U-Profilen (6a, 6b) gebildet ist.

8. Mähdrescher nach einem der Ansprüche 1 bis 7, dadurch gekennzeichnet, daß die beiden Abweiserteile (9a, 9b) des Außenabweisers (9) in der gestreckten Arbeitsstellung durch einen im Gelenkbereich (23) angeordneten Feststeller (24), wie Riegel, Rastbolzen, Spannhebel, od. dgl., gegeneinander arretiert sind.

## Claims

1. Combine harvester and thresher having a cutter mechanism (2) arranged transversely on the front of the harvester chassis and two lateral grain dividers (5) offset to the front of the cutter mechanism (2) and each constituted by a main divider (7), an inner divider shoe (8) and an outer divider shoe (9), said grain dividers (5) being adapted to be swung inwards into the carriage/parked position, about a respective articulated joint (6) forward of the cutter mechanism (2), out of their working position in which they point in the direction of travel and project forward of the cutter mechanism (2),
characterised in that a respective restricted guidance mechanism (17) places the outer divider shoe (9) of each grain divider (5) against the main divider (7) when the grain dividers (5) are swung inwards towards the cutter mechanism (2).

2. Combine harvester according to claim 1, characterised in that the restricted guidance mechanism (17) is constituted by a control lever (18) flexibly mounted between the cutter mechanism side and the outer divider shoe (9).

3. Combine harvester according to claims 1 and 2, characterised in that the control lever (18) is constituted by a lever that is rigid *per se* and is flexibly mounted at both its longitudinal ends about a respective vertical swivelling axis (19, 20) in a pillow block (21, 22) attached to the side wall (2a) of the cutter mechanism (2) and to the outer divider shoe (9).

4. Combine harvester according to any of claims 1 to 3, characterised in that the outer divider shoe (9) is split lengthways into a front and a rear divider shoe element (9a, 9b), its two divider shoe elements (9a, 9b) being interconnected by an articulated joint (23) in a manner enabling them to be swung against one another and the rear divider shoe element (9b) being adapted to be placed against the front divider shoe element (9a) which is adapted to be swung up against the main divider (7) or to be swung at the side wall (2a) of the cutter mechanism (2).

5. Combine harvester according to any of claims 1 to 4, characterised in that the control lever (18) is hinged at the rear divider shoe element (9b) by one longitudinal end at a distance from the divider shoe element swivel axis (23) and in dependence on the swinging motion of the grain divider the control lever (18) is used to swing the front divider shoe element (9a) onto the main divider (7) and the rear divider shoe element (9b) is swung with restricted guidance and is kept spaced parallel from the side wall (2a) (Fig. 2).

6. Combine harvester according to any of claims 1 to 4, characterised in that the control lever (18) is hinged at the front divider shoe element (9a) by one longitudinal end at a distance from the divider shoe element swivel axis (23) and the rear divider shoe element (9b) is adapted to be swung about the swivel axis (23) against the front divider shoe element (9a) and the control lever (18) is used to swing the two divider shoe elements (9a, 9b) alongside one another jointly up to the grain divider (7) as the grain divider (7) is being swivelled on its articulated joint (6) (Figs. 3 and 4).

7. Combine harvester according to any of claims 1 to 6, characterised in that the swivel joint (6) between the grain divider (7) and the cutter mechanism side wall (2a) is inserted into a tube (11) which receives the divider shoes (7, 8, 9) in articulated manner in a mount (10) at the front extremity, and into a guide strut (17) located on the cutter mechanism side wall (2a) and is constituted by two intermeshing U-sections (6a, 6b) which are adapted to be swung about a common vertical swivel axis (6c) and are lockable by a push-in pin (14) in both positions adapted to be swung through approximately 90 degrees with respect to one another.

8. Combine harvester according to any of claims 1 to 7, characterised in that the two divider shoe elements (9a, 9b) of the outer divider shoe (9) are locked against one another when extended in the working position, by a locking device (24) arranged in the joint region (23), for example by a bolt, catch, cocking lever or the like.

## Revendications

1. Moissonneuse-batteuse avec diviseur de tiges comprenant un dispositif de coupe (2) disposé transversalement à la partie antérieure du châssis de la moissonneuse-batteuse et deux diviseurs de tiges (5), disposés latéralement, en amont du dispositif de coupe (2) et composés, chacun, d'un diviseur principal (7), d'un déflecteur vers l'intérieur (8) et d'un déflecteur vers l'extérieur (9), ces diviseurs de tiges (9) qui, sont pivotables de leur position de travail, dirigée dans le sens de marche et en saillie en avant du dispositif de coupe (2) sont pivotables, autour d'une articulation (6), devant le dispositif de coupe (2), en position de transport et en position d'arrêt,
caractérisé en ce que
le déflecteur (9) de chaque diviseur de tige(5) porte contre le diviseur principal (7)lors du pivotement des diviseurs de tiges (5) en direction du dispositif de coupe (2), par l'intermédiaire d'un guidage forcé (17).

2. Moissonneuse-batteuse selon la revendication 1,
caractérisée en ce que
le guidage forcé (17) est formé par un levier de commande (18), monté, articulé, entre le côté du dispositif de coupe (2) et le déflecteur extérieur (9).

3. Moissonneuse-batteuse selon la revendication 1 ou 2,
caractérisée en ce que
le levier de commande (18) consiste en un levier rigide et est monté par ses deux extrémités longitudinales, articulées chacune sur un pivot vertical (19, 20), dans un palier (21, 22) fixé à la paroi latérale (2a) du dispositif de coupe (2) et au déflecteur extérieur (9).

4. Moissonneuse-batteuse selon l'une des revendications 1 à 3,
caractérisée en ce que
le déflecteur extérieur (9) est divisé, dans le sens de la longueur, en une partie de déflecteur antérieure et une partie de déflecteur postérieure (9a, 9b), ses deux parties de déflecteur (9a, 9b) étant reliées, pivotables à l'opposé l'une de l'autre, par une articulation et la partie de déflecteur postérieure (9b) pouvant porter contre la partie de déflecteur antérieure (9a), pivotable sur le diviseur principal (7), ou pivotant vers la paroi latérale (2a) du dispositif de coupe (2).

5. Moissonneuse-batteuse selon l'une des rvendications 1 à 4,
caractérisée en ce que
le levier de commande (18) est articulé, par l'une de ses extrémités longitudinale, sur la partie de déflecteur postérieure (9b), à distance du pivot (23), et que la partie de déflecteur antérieure (9a) est pivotée sur le diviseur principal (7), en dépendance du pivotement du diviseur de tiges, par l'intermédiaire d'un levier de commande (18), la partie de détecteur postérieure (9a) étant pivotée de force et maintenue, parallèlement, à distance de la paroi latérale (2a) (fig. 2).

6. Moissonneuse-batteuse selon l'une des revendications 1 à 4,
caractérisée en ce que
le levier de commande (18) est articulé, par l'une de ses extrémités longitudinale, sur la partie de déflecteur antérieure (9a), à distance du pivot (23), et que la pièce de déflecteur postérieure (9b) peut être pivotée, sur le pivot (23) vers la pièce de déflecteur antérieure (9a), les deux pièces de déflecteur (9a, 9b), disposées l'une à côté de l'autre, étant pivotées ensemble vers le diviseur principal (7), par le levier de commande (18), lors du pivotement du diviseur de tiges (5) autour de son articulation (6).

7. Moissonneuse-batteuse selon l'une des revendications 1 à 6,
caractérsiée en ce que
l'articulation de pivotement (6) est disposée, entre le diviseur de tiges (5) et la paroi latérale (2a) du dispositif de coupe, dans un tube, dans un support (10) duquel les déflecteurs (7, 8., 9) sont logés, articulés, à l'extrémité frontale, et un étai de guidage (17), fixé à la paroi latérale (2a) du dispositif de coupe, cette articulation consistant en deux profilés en U (6a, 6b) s'engrenant l'un dans l'autre, lesquels pivotent autopur d'un axe vertical, commun (6c) et peuvent être bloqués dans deux positions, pivotables de 90 degrés environ par rapport l'une de l'autre, à l'aide d'une tige débrochable (14).

8. Moissonneuse-batteuse selon l'une des revendications 1 à 7,
caractérisée en ce que
les deux parties (9a, 9b) du déflecteur extérieur (9) sont bloquées en position de travail tendue par un dispositif d'arrêt (24), tel que verrou, boulon d'arrêt, levier de serrage ou analogue.
